# EUROPEAN PATENT APPLICATION

(11) **EP 1 715 556 A1**
(43) Date of publication of application: **25.10.2006**
(21) Application number: 05103139.1
(22) Date of filing: 19.04.2005
(51) Int. Cl.: H02G 5/06

(54) **Partition Wall**

(71) Applicant: VA TECH Transmission & Distribution SA, 38000 Grenoble (FR)
(72) Inventor: Diaferia, Cataldo, 38340, Voreppe (FR); Harscoet, Fabrice, 38330, Montbonnot (FR)
(74) Representative: Berg, Peter

(57) **Abstract**

Partition walls of enclosed switchgear devices or enclosed lines for supporting and positioning the conductors inside the enclosure must comprise insulators for electrically separating the conducting electrical conductors led through the partition wall from the grounded enclosure. Such partition walls should be compact, especially with small radial dimensions, to allow small overall dimensions of the partition wall and consequently also of the switchgear or line, even for HV applications. This is achieved by the invention by providing an tubular insulation means 14 between a plate 12 of the partition wall 11 and a connecting means 13 for connecting the conductors 10a, 10b of two adjacent sections.

## Description

The present invention concerns a partition wall of a metal enclosure of a switchgear or line for separating one section of the metal enclosure from another one, the partition wall comprises a plate which is supporting at least one electrical conductor which is led through the partition wall from one section of the metal enclosure to the other section, the partition wall further comprises an electrical conductive connection means, the partition wall and the connection means being separated by an electrical insulating means.

Insulators of electrical devices have to fulfil certain requirements. First, the insulation distance must be long enough to avoid arcing between the terminals of the insulator, which is of course also dependent from the surrounding media, e.g. SF₆ in gas insulated switchgear. Second, the insulator must provide a high creep resistance to avoid creep currents flowing between the terminals of the insulator. Therefore, the creepage distance defined by the dimensions of the insulator must be long enough to suppress or at least reduce creep currents. These criteria must be observed especially in high voltage (HV) devices, such as air or gas insulated switchgear (AIS or GIS).

A switchgear typically comprises a metallic enclosure through which an electric conductor is led through and which may house different electrical devices such as switches, circuit breaker, etc. The metallic enclosure is typically partitioned in several sections (or compartments) by partition walls for enabling or simplifying the assembly of the switchgear. Said partition walls act simultaneously as supporting, positioning and guidance device for the electrical conductor inside the enclosure. The partition walls may separate adjacent sections in gas tight manner or there may be provided connection openings in the partition walls for allowing circulation of gas between the sections. Since the metallic enclosure is typically grounded, an insulator has to be provided between the metallic enclosure or the partition wall and the electrically conducting conductor. Such partition walls are often also used in enclosed electric lines.

To achieve electrical insulation correctly, one solution consists in inserting the three electrodes in a large discoid support plate made of insulating material, generally an epoxy resin. An airtight partition of this type is described in the document DE 26 24 908 A1. The periphery of the insulating support plate is accommodated in a metal armature ring enabling fixing thereof to an end flange of the enclosure of one of the sections of the installation. However, the insulating support is then of large size, which again results in a limitation of the maximum voltage of the installation. Furthermore, manufacturing an insulating plate of large dimensions is costly.

An alternative solution for a gas filled enclosed line, disclosed in EP 717 484 A1, comprises a metal support plate provided with openings enabling individual bushings to be inserted. Each individual bushing then comprises an insulating part supporting one of the electrodes in its central part. To prevent arcing between the electrodes and the support, it is sought to lengthen the creepage distance between the electrodes and the plate, which results in the characteristic tapered shape of the insulating parts supporting the electrodes. Tapered insulators of this kind not only protrude in the axial direction from the end face of the partition but have also a significant radial extension, which prevents a compact arrangement of the conductors.

Another partition wall is for example disclosed in EP 1 182 760 A1 which shows a partition wall of a three-phase electrical switchgear. A disc shaped partition wall is arranged between the flanges of two adjacent enclosure parts and comprises a disc shaped insulator as support for each of the three conductors led through the partition wall. The axial dimensions of the partition wall is limited by the two end faces of the partition wall, thus enabling to insert the wall in radial direction, without the need to axially displace the adjacent enclosures. This simplifies the assembly of the switchgear, but on the other hand, increases the radial dimensions of such a partition wall, especially for HV switchgear, because of the required arcing and creepage distance.

It is well-known that the dielectric reliability of switchgear greatly depends on electric field stress on some so-called "triple point interfaces", which are common boundaries between insulating part, surrounding media, e.g. insulating gas, and the conductor. The designer of switchgear aims to reduce the electric field on these interfaces to essentially achieve zero-electric-field areas. With the known partitions, whose insulating parts extend mainly in radial direction, it would be necessary to increase the diameter of the partition if the voltage range is to be increased and the overall dimension of switchgear or line would be affected which is adverse to achieving a compact design.

It is an object of the invention to provide a partition wall for partitioning a metallic enclosure of an electrical device and for supporting a conductor led through the metallic enclosure which is robust and compact and which can easily be adapted to different voltage ranges.

This object is solved by the features of the present invention according to claim 1.
With a partition wall according to the invention, the partition may easily be adapted to different voltage ranges by simply adapting the length of the tubular insulation means. The radial dimension of the partition wall is then mainly dependent from the required insulation distance between each conductor and conductor and enclosure and is not significantly affected by required creepage distance, which allows the design of a very flexible compact partition wall and hence also of a very compact switchgear or line, even for HV applications.
Another advantage is due to the fact that the electric field of the conductor led through the partition wall is essentially orthogonal to creepage distance along the tubular insulation means, which reduces dielectric stress and increases dielectric reliability of the insulation means.

Advantageous embodiments and further advantages of the invention follow from the dependent claims and the following description of the invention.

The invention is described in detail in the following with reference to the Figs. 1 to 6, showing advantageous, non-limiting and schematic embodiments of the invention, in which
Fig. 1 depicts a typical three-phase GIS device with each phase enclosed in its independent enclosure,
Fig. 2 shows a cross section of a three-phase partition wall in an enclosure,
Fig. 3 shows a three-phase partition wall in detail
Fig. 4 shows a three-phase partition wall in perspective and
Fig. 5 and 6 part of an alternative embodiment of a partition wall.

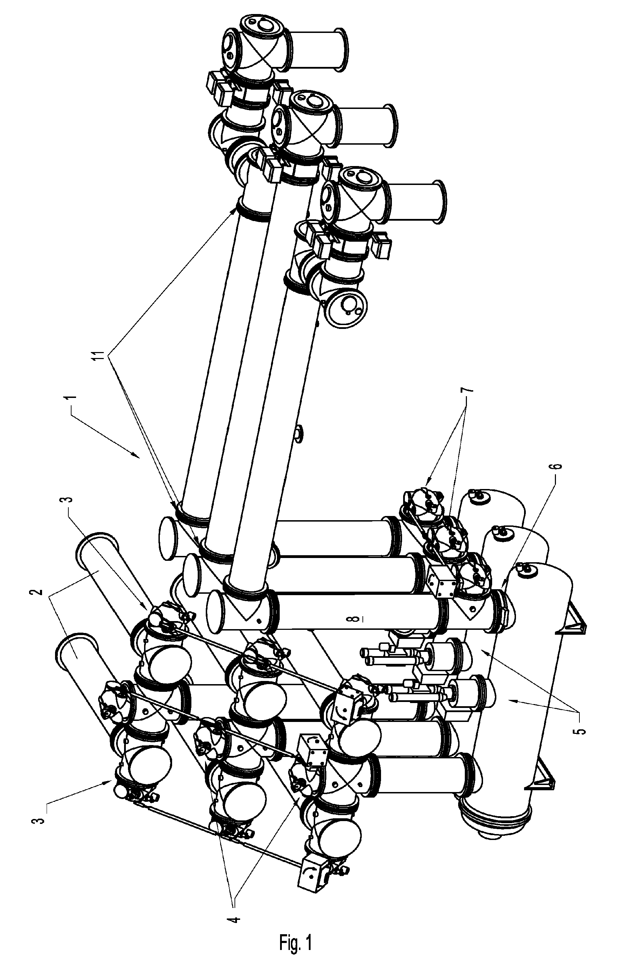

A gas insulated switchgear (GIS) device 1 typically comprises busbars 2 for each phase, disconnector switches 3, earthing switches 4, 7 and circuit breaker 5, as shown in Fig. 1, although it may as well comprise other, further and/or different devices, as is well-known. It could of course also have only a single enclosure for more than one phase, e.g. a three-phase switchgear in one enclosure. Such switchgear devices 1 are well-known from prior art and hence are not explained in detail.
The enclosure 8 of the GIS device 1 is filled with insulating gas, e.g. SF₆ gas, and contains also the electrical conductor(s), which is (are) led through the switchgear 1. The enclosure 8 is separated into several sections to allow the easy assembly of the switchgear 1. The sections are joined together with flanges arranged on the end faces of the single sections. The conductor is positioned and supported inside the enclosure 8 by insulators which have to be dimensioned to prevent arcing and creepage currents between the conducting conductor and the grounded enclosure 8. To this end partition walls 11 between adjacent sections are provided which carry the insulator and hence, support and position the conductor. The partition walls 11 may also be gas tight to seal one section from the adjacent one with respect to the insulating gas which is especially advantageous for disassembling or maintenance works, since the SF₆ gas needs then only to be removed from certain sections and not from the complete enclosure 8. It is of course also possible to include more than one conductor inside the enclosure 8, e.g. three conductors for a three-phase switchgear, which requires also a partition wall 11 which carries one insulator for each of the conductors.

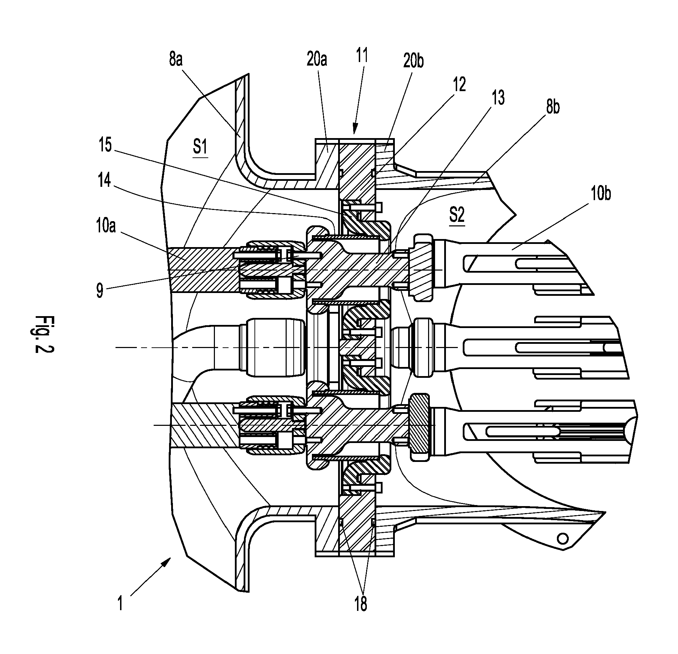

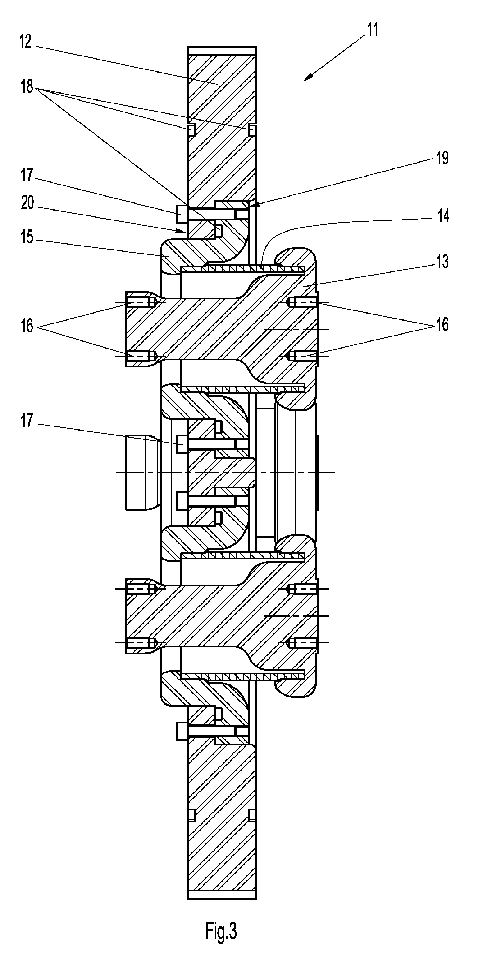

Fig. 2, and Fig. 3 in detail, shows an embodiment of an inventive three-phase partition wall 11. The partition wall 11 is arranged between two flanges 20a, 20b of two adjacent enclosure parts 8a, 8b, thus separating two sections S₁ and S₂ of the switchgear 1. To ensure gas tightness of the enclosure, seals, like e.g. gaskets 18, are provided between the flanges 20a, 20b and the plate 12 of the partition wall 11.
Since the partition wall 11 may support one or more conductors 10 and the conductors 10 for each phase and the corresponding parts of the partition wall 11 are essentially identical, the inventive partition wall 11 is described in the following without any restrictions only with respect to one phase. The partition wall 11 of this example supports and positions three conductors 10, one for each phase, which are led through the partition wall 11 and through the enclosure 8.
The partition wall 11, as best seen from Fig. 3, comprises a plate 12, preferably a metal plate of high mechanical strength to withstand the high pressure in the enclosure (in case only one of the adjacent sections is gas filled), which supports and positions the electrical conductor 10a, 10b (not shown in Fig. 3) led through the partition wall 11 from one section of the enclosure 8 to the adjacent one. The plate 12 of this example is of discoid shape and may be of any cross section depending on the cross section of the enclosure 8, preferably a circular cross section. The partition wall 11 is provided for three phases and comprises for each phase an electrical conductive connection means 13 for connecting the conductors 10a, 10b on each side of the partition wall 11. To this end the connection means 13 may be provided with tapped holes 16 for connecting the conductors 10a, 10b to the connection means 13, e.g. by means of threaded bolts 9.
The connection means 13 is mounted on one of the end faces of an insulation means 14 and is in this embodiment arranged such that the insulation means 14 surrounds the connection means 13 at least partly. The connection between connection means 13 and insulation means 14 may be of any suitable mechanical connection, e.g. a positive and/or non-positive connection, bonding, threaded bolts, etc. If a gas-tight separation of adjacent enclosure sections is to achieved, the connection between connection means 13 and insulation means 14 needs to be gas-tight which can be achieved e.g. by snug fit or by using suitable seals, e.g. like gaskets.
The other end face of the insulation means 14 is fixed to a fitting 15, e.g. by any suitable mechanical connection, which is designed to fix the insulation means 14 and connection means 13 arrangement to the plate 12 having an opening for each phase. To this end fitting 15 is provided with a fitting flange 19 for fixing it to a shoulder 20 of the plate 12. The fitting 15 in the embodiment of Fig. 3 is fixed to the plate 12 by means of threaded bolts 17, but any other suitable connection would of course also be possible.
Between fitting flange 19 and shoulder 20 another gasket 18 may be provided if a gas-tight partition is to be achieved. The connection between fitting 15 and insulation means 14 may be of the same type as the connection between connection means 13 and insulation means 14 as described above.

The insulation means 14, the fitting 15 and the connection means 13 may have any suitable cross section, preferably a circular cross section for easy manufacturing.

The insulation means 14 is to be designed and dimensioned to ensure that no or at least only small creepage currents flow from the conducting connection means 13 to the grounded fitting 15 or plate 12. This means that the insulating distance between the two terminals of the insulation means 14 needs to be long enough to avoid such creepage currents.

The insulation means 14 is of tubular shape, which means in the context of this application that the axial extension of the insulation means 14 is, preferably significantly, greater than its radial extension, contrary to a discoid shape, which has a radial extension greater or in the same magnitude than its axial extension. A ratio of >1, preferably greater 1.3, especially greater 1.5 or 2, between axial and radial extension is advantageous. The upper limit of the ratio is basically determined by the voltage range of the switchgear device. For HV applications, e.g. with voltages of >72.5kV and up to 145kV or even greaten, the creepage distance of the insulation means 14 needs of course be much greater than for medium high voltage applications (e.g. 6kV - 32 kV) or low voltage applications. With such a tubular insulation means 14, the creepage distance is essentially defined by its axial extension and consequently, only the axial dimension of the insulation means 14 needs to be adapted to adapt the partition wall 11 to different voltage ranges, whereas its radial dimension depends mainly on the required insulation distance between each conductor 10 and between conductor 10 and enclosure. This means that only the length of insulating tube 14 needs to be adapted if the constraint of the insulation distance is fulfilled. This allows to design the insulation means 14, and therefore also the partition wall 11 itself, of small radius which again leads to a very compact, but still flexible, design of the partition wall 11 since the conductors 10 may consequently be arranged very close together.
By using a tubular insulation means 14 it is also achieved that the electric field of the conductor led through the tubular insulation means 14 is essentially orthogonal to the creepage distance along the insulation means 14. This reduces the dielectric stress on the insulation means 14 and increases its dielectric reliability.

The insulation means 14 may be formed from cast resin or fibre- (e.g. glass, polyester or aramid fibres) reinforced resin, which materials provide excellent mechanical and electrical insulation strength combined with low density, low weight and high resistance against chemicals, like the SF₆ gas in the enclosure. Moreover such resin tubes may be manufactured in almost any shape and cross section, which makes them also very flexible.

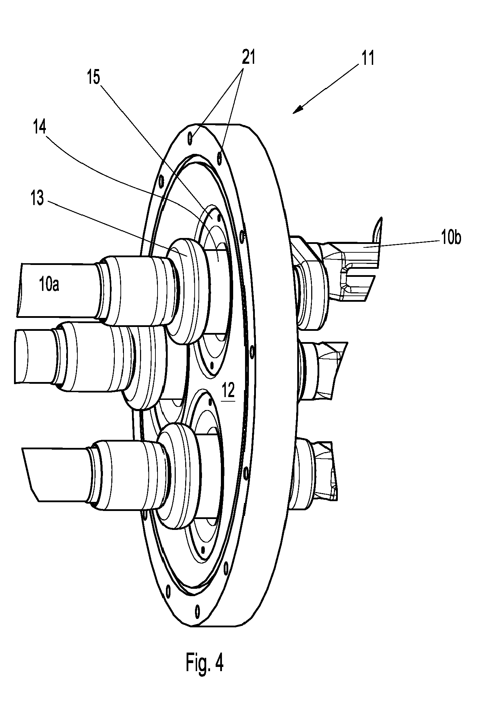

In the perspective view of Fig. 4 a circular partition wall 11 is shown. The plate 12 of the partition wall 11 has holes 21 at its radial end for fixing the partition wall 11 between the flanges 20a, 20b of the adjacent enclosure parts 8a, 8b, e.g. by bolts going through the holes 21. The three phases are arranged e.g. on a circle within the plate 12, but any other suitable arrangement would of course also be possible. Because of the very compact arrangement due to the tubular insulation means 14, the conductors 10a, 10b of the single phases may be arranged close together and the overall radial extension of the partition wall 11 may be kept small which in turn allows to compactly dimension the enclosure of the switchgear even in case of HV applications.
For a single phase partition wall 11 there would of course be only one conductor 10, preferably arranged in the centre of the partition wall 11.

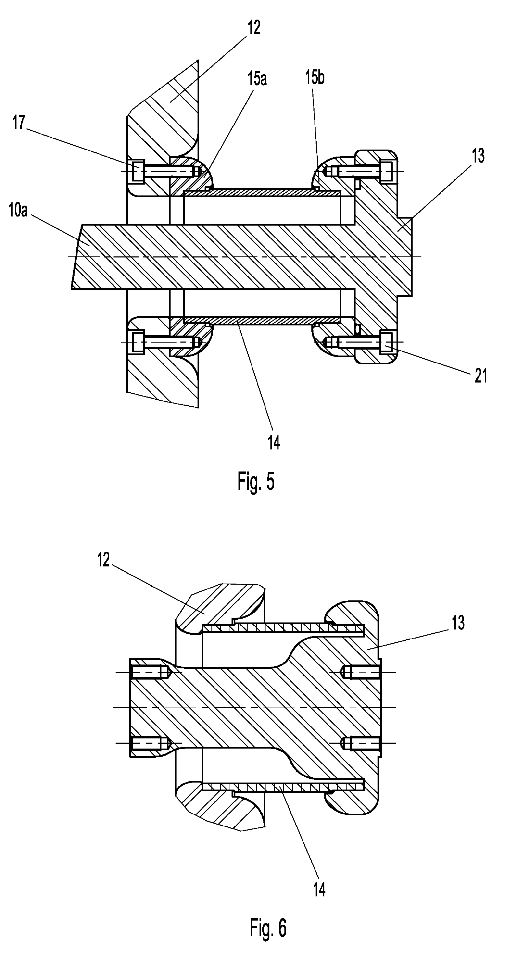

Fig. 5 depicts part of another advantageous embodiment of the inventive partition wall 11. The insulation means 14 is provided with a fitting 15a, 15b on each of its end face. One fitting 15a is used to fix the insulation means 14 to the plate 12, e.g. by means of threaded bolts 17, and the other fitting 15b is used to fix the connection means 13, in this case part of a conductor 10a, to the insulation means 14, e.g. by threaded bolts 21. The connection between fittings 15a, 15b and insulation means 14 may be of any suitable mechanical connection, as described above.

Yet another advantageous embodiment shows Fig. 6 with an tubular insulation means 14 which is with one end face directly fixed to the plate 12 by means of any suitable mechanical connection, e.g. a positive and/or non-positive connection, bonding, threaded bolts, etc. The other end face may be connected to a fitting 15b or the connection means 13 (as shown in Fig. 6).

Although the invention is only described with reference to a switchgear, it is also applicable to enclosed lines (single or multiple phase), like e.g. gas-insulated lines, having a number of partition walls along the line to support the conductor(s) and/or separate the line in several sections.

## Claims

1. Partition wall of a metal enclosure of a switchgear or line for separating one section of the metal enclosure from another one, the partition wall (11) comprises a plate (12) which is supporting at least one electrical conductor (10) which is led through the partition wall (11) from one section of the metal enclosure to the other section, the partition wall (11) further comprises an electrical conductive connection means (13), the partition wall (11) and the connection means (13) being separated by an electrical insulating means (14), **characterised in that** the insulating means (14) is of tubular shape with two end faces, one end face being connected to the partition wall (11) and the opposite end face being connected to the connection means (13).

2. Partition wall according to claim 1, **characterised in that** the partition wall (11) comprises a fitting (15, 15a) for fixing the insulating means (14) to the partition wall (11).

3. Partition wall according to claim 1 or 2, **characterised in that** the insulating means (14) comprises a fitting (15b) for fixing the connection means to the insulating means (14).

4. Partition wall according to one of claims 1 to 3, **characterised in that** the insulation means (14) surrounds the connection means (13) at least partly.

5. Partition wall according to one of claims 1 to 4, **characterised in that** the insulation means (14) is formed of resin, preferably fibre-reinforced resin.
